# EUROPEAN PATENT APPLICATION

(11) **EP 2 165 772 A2**
(43) Date of publication of application: **24.03.2010**
(21) Application number: 09168935.6
(22) Date of filing: 28.08.2009
(51) Int. Cl.: B05C 3/09

(54) **Draw-off coating apparatus for making coating articles, and/or methods of making coated articles using the same**

(30) Priority: 18.09.2008 US 232540
(71) Applicant: Guardian Industries Corp., Auburn Hills, MI 48326-1714 (US)
(72) Inventor: Wang, Zhongming, Ypsilanti, MI 48197 (US); Thomsen, Scott V., South Lyon, MI 48178 (US)
(74) Representative: Hess, Peter K. G.

(57) **Abstract**

Certain example embodiments relate to a draw-off coating apparatus and/or system for depositing a coating on a substrate (e.g., a glass substrate), and/or a method of making coating articles using the same. At least one substrate (10) to be coated is inserted into a tank (20). A liquid or sol-gel like mixture (either or both of which may have a low viscosity) is pumped into the tank (20) in a controlled manner. The at least one substrate (10) is allowed to dwell in the mixture. The liquid or sol-gel like mixture is drawn-off of the tank in another controlled manner. The drawn-off liquid or sol-gel like mixture may be provided to another tank having at least one substrate to be coated. Thus, it is possible in certain example embodiments to form coatings on large-dimension glass substrates, while enabling desired coating performance on one or both surfaces of the glass substrates to be achieved.

## Description

### FIELD OF THE INVENTION

Certain example embodiments of this invention relate to techniques for depositing coatings on substrates. More particularly, certain example embodiments relate to a draw-off coating apparatus and/or system for depositing a coating on a substrate (e.g., a glass substrate), and/or a method of making coating articles using the same. In certain example embodiments, at least one substrate to be coated is inserted into a tank, a liquid or sol-gel like mixture (either or both of which may have a low viscosity) is pumped into the tank in a controlled manner, the at least one substrate is allowed to dwell in the mixture, and the liquid or sol-gel like mixture is drawn-off from the tank in another controlled manner. The drawn-off liquid or sol-gel like mixture may be fed into another tank having at least one substrate to be coated.

### BACKGROUND AND SUMMARY OF EXAMPLE EMBODIMENTS OF THE INVENTION

Depositing coatings (e.g., optical coatings) on large glass substrates can be complicated. Coating thickness and coating uniformity typically are specified and often must be tightly controlled, especially for thin-film coatings such as nanothin anti-reflective (AR) coating films.

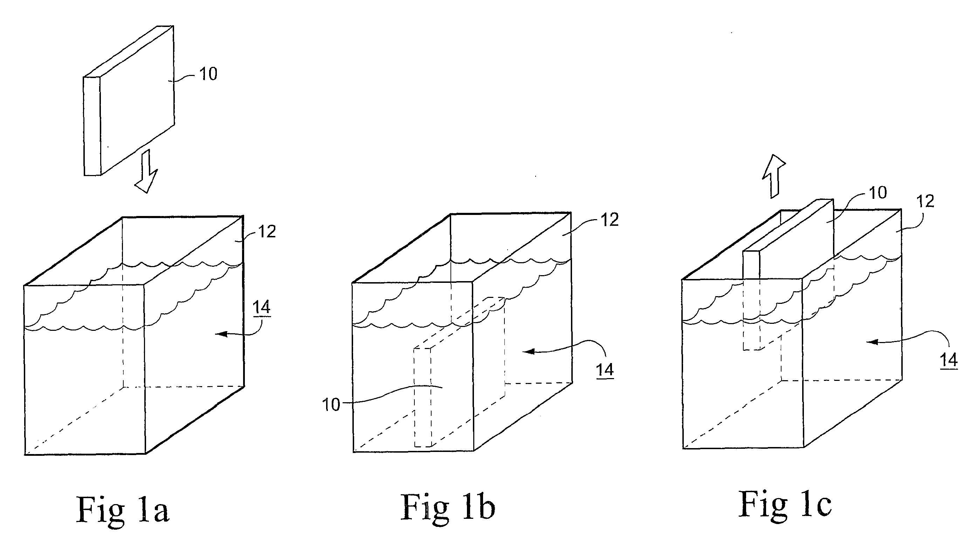

The technique most widely used by the coating industry to deposit on large glass substrates thin optical coatings that satisfy the specific requirements demanded by the relevant markets is the dip coating process. Fias. 1a-1c illustrate a conventional dip coating process used to deposit a coating on a substrate. Conventional dip coating generally can be separated into stages, shown generally in Figs. 1a-1c. In an immersion stage (Fig. 1a), the substrate 10 is moved over the tank 12 and is immersed in a coating solution 14 at a substantially constant speed. The immersion of the substrate 10 is accomplished with a reduced amount of "judders" or "shaking." In a dwell phase (Fig. 1b), the substrate 10 remains immersed and substantially motionless in the coating solution 14 to allow for the coating material to apply itself to the substrate 10. Finally, the substrate 10 is withdrawn (Fig. 1c), again at a constant speed, also with a reduced amount of judders or shaking. Generally, the faster the substrate 10 is withdrawn from the tank 12, the thicker the coating material will be applied to the substrate 10. The coated substrate optionally may be transferred to a cure oven after it has been removed from the coating tank 12.

Although the coating industry has successfully used the dip coating process for a number of years, further enhancements are still possible. For example, it is known that the coating mixture's rheological properties generally need to be precisely controlled, as these rheological properties influence the coating's thickness and uniformity. As is known, rheology relates to the science of the deformation and flow of matter and can be used to study the behavior of coatings (e.g., by helping to determine whether a coating will adhere or fall off, be absorbed, require a pretreatment, spread or dry in the necessary time, react with another coating, etc.). Unfortunately, it often is hard to consistently control the coating mixture's rheological properties during production. Some of the coating mixture evaporates from the tank, which is open at the top where in the substrate is inserted. Additionally, when the substrate is removed and at least temporarily held over the tank, some of the concentrated coating material drips off of the coated surface and back into the coating tank. It is also sometimes difficult to ensure that the speed of the draw is substantially uniform.

Another disadvantage associated with conventional dip coating processes is that a clean room also is needed to help reduce the chances of unwanted particles becoming attached to the substrate during the dip coating process (e.g., when it is positioned over the tank, dwelling in the tank, removed from the tank, and/or during transportation). Furthermore, environmental stability is a factor that influences the coating quality during the dip coating process. The clean room must be large, especially when large substrates are to be coated. Indeed, the clean room must be at least twice as high as the substrate to be coated so that it may be positioned over the tank and immersed therein. Evaporation of the coating mixture (e.g., when the substrate is lifted from the tank) also may pose safety and/or environmental issues.

Thus, it will be appreciated that there is a need in the art for a technique that improves upon conventional dip coating processes and/or overcomes one or more of these and/or other disadvantages. It also will be appreciated that there is a need in the art for a coating process that deposits a low viscosity coating mixture on large-dimension glass substrates, while enabling desired coating performance on one or both surfaces of the glass substrates to be achieved. Still further, it will be appreciated that there is a need in the art for a process capable of depositing high quality coatings with a high production yield.

In certain example embodiments of this invention, an apparatus for forming a coating on a substrate is provided. A sealed tank is configured to receive one or more substrates to be coated. At least one door is provided on a side of the tank allowing the one or more substrates to be inserted into and/or removed from the tank. A coating flow distributor is provided, with the coating flow distributor being configured to (a) pump coating mixture into the tank in a first controlled manner such that a level of the coating mixture in the tank rises at a first substantially uniform rate, and (b) draw-off the coating mixture in a second controlled manner such that the level of the coating mixture in the tank decreases at a second substantially uniform rate.

In certain example embodiments, a method of making a coated article is provided. At least one substrate to be coated is inserted into a tank. A coating mixture is provided to the tank in a first controlled manner until the at least one substrate inserted therein is at least partially submerged, with the.coating mixture rising at substantially uniform levels. The at least one substrate is allowed to remain at least partially submerged in the coating mixture for a predetermined amount of time. The coating mixture is drawn-off from the tank at a second controlled manner until the at least one substrate inserted therein is no longer at least partially submerged, with the coating mixture falling at substantially uniform levels.

In certain example, embodiments, a system for forming coatings on substrates is provided. First and second sealed tanks are provided. Each said tank is configured to receive one or more substrates to be coated, and each said tank comprises at least one door provided on a side thereof allowing the one or more substrates to be inserted into and/or removed therefrom. At least one coating flow distributor is configured to: (a) pump the coating mixture into the first tank in a first controlled manner such that a level of the coating mixture in the first tank rises at a first substantially uniform rate, (b) draw-off the coating mixture in the first tank in a second controlled manner such that the level of the coating mixture in the first tank decreases at a second substantially uniform rate, (c) pump the coating mixture into the second tank as it is being drawn-off from the first tank in a third controlled manner such that a level of the coating mixture in the second tank rises at a third substantially uniform rate, (d) draw-off the coating mixture in the second tank in a fourth controlled manner such that the level of the coating mixture in the second tank decreases at a fourth substantially uniform rate, and (e) pump the coating mixture into the first tank as it is being drawn-off from the second tank in the first controlled manner such that a level of the coating mixture in the first tank rises at the first substantially uniform rate.

In certain example embodiments, a method of making a coated article is provided. At least one substrate to be coated is inserted into a first tank. A coating mixture is provided to the first tank in a first controlled manner until the at least one substrate inserted therein is at least partially submerged, with the coating mixture rising at substantially uniform levels in the first tank. The at least one substrate is allowed to remain at least partially submerged in the coating mixture provided to the first tank for a first predetermined amount of time. At least one substrate to be coated is inserted into a second tank. The coating mixture is drawn-off from the first tank in a second controlled manner until the at least one substrate inserted therein is no longer at least partially submerged, with the coating mixture falling at substantially uniform levels in the first tank. The at least one substrate is removed from the first tank. The coating mixture is provided to the second tank from the first tank in a third controlled manner until the at least one substrate inserted in the second tank is at least partially submerged, with the coating mixture rising at substantially uniform levels in the second tank. The at least one substrate is allowed to remain at least partially submerged in the coating mixture provided to the second tank for a second predetermined amount of time. The coating mixture is drawn-off from the second tank in a fourth controlled manner until the at least one substrate inserted therein is no longer at least partially submerged, with the coating mixture falling at substantially uniform levels in the second tank. The at least one substrate is removed from the second tank. Optionally, the coating mixture may be provided to the first tank from the second tank in the first controlled manner until the at least one substrate inserted in the first tank is at least partially submerged, with the coating mixture rising at substantially uniform levels in the first tank.

In certain example embodiments, a system for forming coatings on substrates is provided. A plurality of tanks is provided. Each said tank is configured to receive one or more substrates to be coated, and each said tank comprises at least one door provided on a side thereof allowing the one or more substrates to be inserted into and/or removed therefrom. At least one coating flow distributor is configured to pump and draw-off the coating mixture between the tanks such that the levels of the coating mixture rise and fall at substantially the same or different uniform rates.

The features, aspects, advantages, and example embodiments described herein may be combined to realize yet further embodiments.

### BRIEF DESCRIPTION OF THE DRAWINGS

These and other features and advantages may be better and more completely understood by reference to the following detailed description of exemplary illustrative embodiments in conjunction with the drawings, of which:

FIGURES 1a-1c illustrate a conventional dip coating process used to deposit a coating on a substrate;

FIGURE 2 is an illustrative draw-off coating apparatus in accordance with an example embodiment;

FIGURE 3 is a flowchart showing an illustrative process for using the draw-off coating apparatus of Fig. 2 to create at least one coated article, in accordance with an example embodiment;

FIGURE 4 is an illustrative draw-off coating apparatus system in accordance with an example embodiment; and

FIGURE 5 is a flowchart showing an illustrative process for using the draw-off coating apparatus system of Fig. 4 to create a plurality of coated articles, in accordance with an example embodiment.

### DETAILED DESCRIPTION OF EXAMPLE EMBODIMENTS OF THE INVENTION

In certain example embodiments of this invention, a draw-off coating apparatus and/or system for depositing a coating on a substrate (e.g., a glass substrate), and/or a method of making coating articles using the same, is/are provided. At least one substrate to be coated is inserted into a tank. A liquid or sol-gel like mixture (either or both of which may have a low viscosity) is pumped into the tank in a controlled manner. The at least one substrate is allowed to dwell in the mixture.
The liquid or sol-gel like mixture is drawn-off of the tank in another controlled manner. The drawn-off liquid or sol-gel like mixture may be provided to another tank having at least one substrate to be coated. Thus, it is possible in certain example embodiments to form coatings on large-dimension glass substrates, while enabling desired coating performance on one or both surfaces of the glass substrates to be achieved, thereby improving upon conventional dip-coating techniques. In certain example embodiments, a system for forming coatings on substrates may comprise two or more tanks, each said tank being configured to receive one or more substrates to be coated and each said tank comprising at least one door provided on a side thereof allowing the one or more substrates to be inserted into and/or removed therefrom; and at least one coating flow distributor configured to pump and draw-off the coating mixture between the tanks such that the levels of the coating mixture rise and fall at substantially the same or different uniform rates.

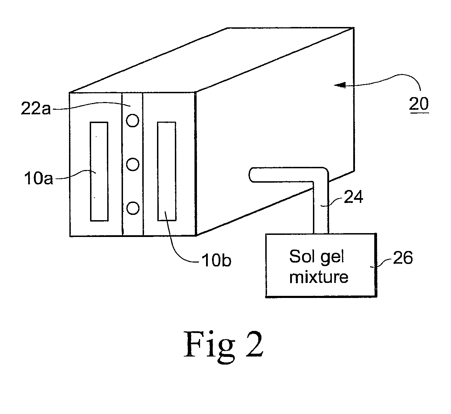

Referring now more particularly to the drawings in which like reference numerals indicate like parts throughout the several views, Fig. 2 is an illustrative draw-off coating apparatus in accordance with an example embodiment. The draw-off coating apparatus of Fig. 2 includes a tank 20. The top of tank 20 may be open or closed. One or more substrates to be coated 10a, 10b etc., may be inserted into the tank 20. The one or more substrates to be coated 10a, 10b, etc., may be substantially stationary (e.g., hanged on or set in a track) once within the tank 20. The one or more substrates to be coated 10a, 10b, etc., do not need to be lifted to placed into or removed from the coating tank 20. Instead, they may be provided to the tank 20 through a side door 22a.

Once the one or more substrates to be coated 10a, 10b, etc., have been placed in the tank 20, the coating mixture (e.g., the sol-gel like mixture) may be pumped into the tank 20 through tubing 24 from a reservoir 26. More particularly, the coating mixture (e.g., the sol-gel like mixture) may be pumped into the tank 20 through tubing 24 from a reservoir 26 at a controlled speed. The coating mixture may be pumped in so as to at least partially submerge the one or more substrates to be coated 10a, 10b, etc., which may be allowed to dwell in the tank 20. In certain example embodiments, the pump-in speed may be controlled so as to incrementally submerge the one or more substrates to be coated 10a, 10b, etc., at a first substantially constant rate. Thus, the level of the coating mixture may increase at a substantially uniform rate.

Following the dwelling, the coating mixture may be pumped out of the tank 20 through the tubing 24 and back into the reservoir 26. The pump-out speed may be controlled to achieve a desired coating on the one or more substrates to be coated 10a, 10b, etc., e.g., in dependence on the relevant rheological properties. In certain example embodiments, the pump-out speed may be controlled so as to draw-off the coating mixture relative to the one or more substrates to be coated 10a, 10b, etc., at a second substantially constant rate. Thus, the level of the coating mixture may decrease at a substantially uniform rate, In certain example embodiments, the first and second substantially constant rates may be the same or different.

Once the coating mixture has been drawn-off, the newly coated one or more substrates 10a, 10b, etc., may be removed from the tank 20. In certain example embodiments, the newly coated one or more substrates 10a, 10b, etc., may be removed from the tank 20 through the same door 22a through which it entered the tank 20, or through a separate door in the tank 20 (e.g., opposite the door 22a). In certain example embodiments, the movement of the one or more substrates 10a, 10b, etc., may be facilitated via one or more corresponding track systems (not shown).

Thus, the coating tanks may include a side-opening structure allowing the glass substrates to be transferred in and out from the side door(s) by a track system provided on the tank top or bottom in certain example embodiments. More particularly, in certain example embodiments, a first side-opening door may be opened when glass is transferred into the tank, and the same or a second door (e.g., on another side such as, for example, the side opposite the first door) may be opened when the substrate needs to be moved out of the tank (e.g., to the cure oven).

It will be appreciated that one or more inlet and/or outlet ports may be used to achieve the pumping-in and drawing-off of the coating mixture. In other words, a single port or a single group of ports may be used for both pumping-in and drawing-off the coating mixture in certain example embodiments, whereas a first port or group of ports and a separate second port or group of ports may be respectively used for pumping-in and drawing-off the coating mixture in certain example embodiments. It also will be appreciated that although the tubing 24 is shown as connecting to a side of the tank 20 in Fig. 2, the tubing and/or associated inlet and/or outlet ports may be positioned elsewhere relative to the tank such as, for example, higher and/or lower on one or more sides of the tank 20, below the tank 20, etc. In certain example embodiments, a coating flow distributor may be provided proximate to the tank (e.g., may be provided under the bottom of the tank) to draw-off the coating in a substantially uniform manner, thereby causing the coating surface level to drop down substantially evenly.

Once the newly coated one or more substrates 10a, 10b, etc., have been removed from the tank 20, they may be transferred to a cure oven (not shown). The movement of the newly coated one or more substrates 10a, 10b, etc., to the cure oven also may be facilitated via the same or different one or more corresponding track systems (not shown).

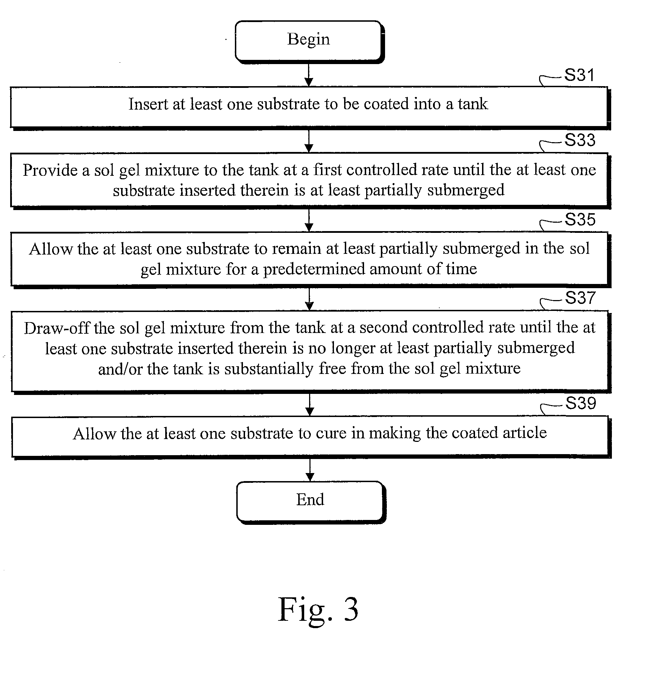

Fig. 3 is a flowchart showing an illustrative process for using the draw-off coating apparatus of Fig. 2 to create at least one coated article, in accordance with an example embodiment. In step S31, at least one substrate to be coated is inserted into a tank. A sol-gel like mixture is provided to the tank at a first controlled rate until the at least one substrate inserted therein is at least partially submerged. The at least one substrate may be held in position in the tank as it is filled, e.g., reducing the number and/or amount of shaking and/or judder to which the at least one substrates are subjected. The at least one substrate is allowed to remain at least partially submerged in the sol-gel like mixture for a predetermined amount of time during step S35. In step S37, the sol-gel like mixture is drawn-off from the tank at a second controlled rate until the at least one substrate inserted therein is no longer at least partially submerged and/or the tank is substantially free from the sol-gel like mixture. The at least one substrate may be removed from the tank. In step S39, the at least one substrate optionally is cured in making the coated article. The curing may be accomplished using a cure oven in certain example embodiments.

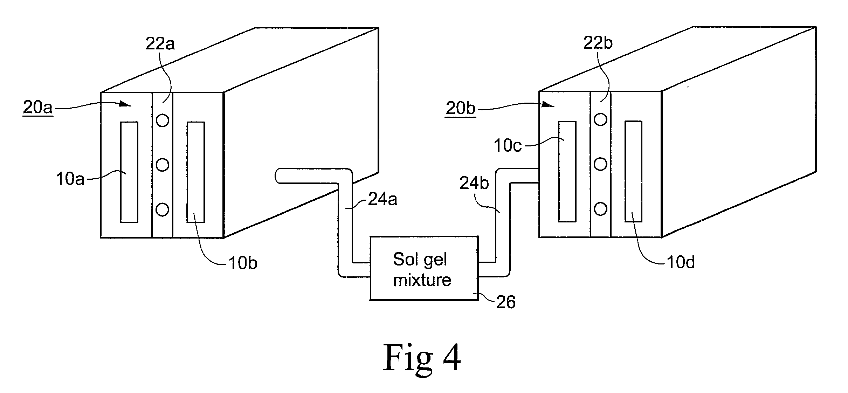

Fig. 4 is an illustrative draw-off coating apparatus system in accordance with an example embodiment. Two tanks 20a and 20b are shown in Fig. 4, and a number of substrates to be coated 10a, 10b, 10c, 10d, etc., can be placed within the tanks 22a and 22b, e.g., through the doors 22a. In certain example implementations, the coating mixture is pumped out of the reservoir 26 and into one of the two tanks in a controlled manner, as described above. After the substrates 10 in the tank dwell, the coating mixture may be drawn-off of the first tank in a controlled manner and pumped into the second tank. For example, the coating mixture may be drawn-off from the first tank 20a, through the tubing 24a, back into the reservoir 26, through tubing 24b, and into the second tank 20b in a controlled manner. This technique may be extended in certain example embodiments, such that two or more coating tanks may be connected in a like manner, thereby taking advantage of this coating delivery system.

As noted above, the pumping-in and drawing-off speeds for a particular tank may be controlled to achieve more consistent coating levels, which may based at least in part on the rheological properties of the substrates to be coated and/or the coating mixture. With respect to a single tank, the pumping-in and drawing-off speeds may be the same or different. Furthermore, in a system with two or more tanks, the drawing-off and pumping-in may be the same or different for each of the tanks. The levels of coating mixtures may be monitored in example embodiments where different speeds are used for different tanks, e.g., to compensate for different pumping-in and drawing-off speeds. For example, attempting to slowly draw-off the coating mixture from a first tank or first group of tanks while quickly pumping the coating mixture into a second tank or second group of tanks may be problematic if a sufficient amount of coating mixture is not provided or already present in a reservoir. Additionally, the levels of coating mixtures may be monitored in example embodiments, as some of the coating material may be removed with the substrates, remain in the tanks, etc. Similar to the above, one or more coating flow distributors provided centrally, in groups, and/or to each of the tanks, may help ensure that the coating mixture is substantially uniformly pumped-in and drawn-off, for one or more of the tanks. In certain example embodiments, the coating mixture may be pumped between tanks more directly, e.g., sometimes reducing or even completely eliminating the need for a coating mixture reservoir or other coating mixture source.

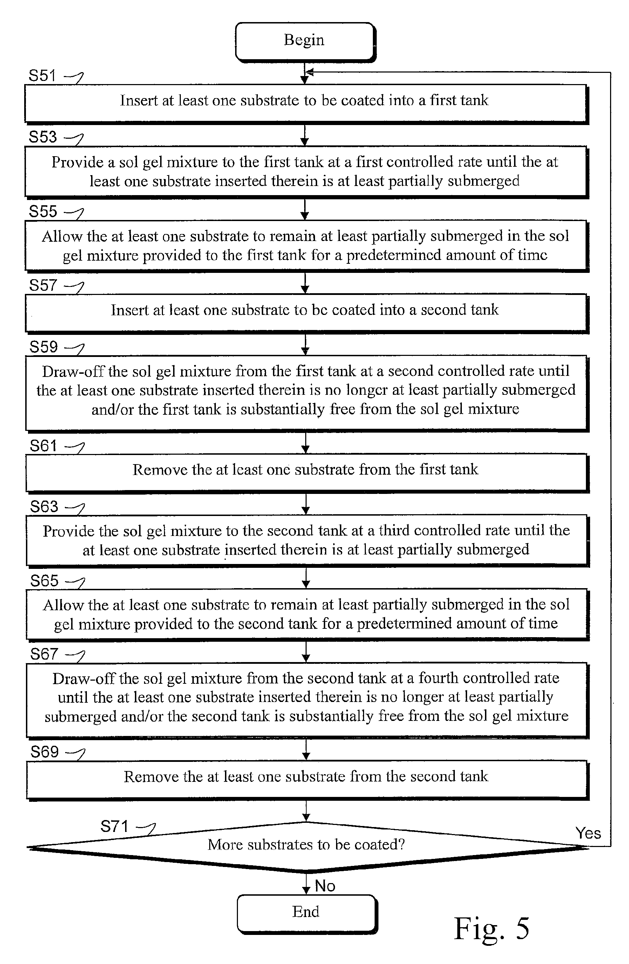

Fig. 5 is a flowchart showing an illustrative process for using the draw-off coating apparatus system of Fig. 4 to create a plurality of coated articles, in accordance with an example embodiment. Fig. 5 is similar to Fig. 3, except that it is corresponds to a coating system with two coating tanks rather than a single coating tank. In step S51, at least one substrate to be coated is inserted into a first tank.
In step S53, a sol-gel like mixture is provided to the first tank at a first controlled rate until the at least one substrate inserted therein is at least partially submerged. The at least one substrate is allowed to remain at least partially submerged in the sol-gel like mixture provided to the first tank for a predetermined amount of time in step S55. At least one substrate to be coated is inserted into a second tank in step S57. In step S59, the sol-gel like mixture is drawn-off from the first tank at a second controlled rate until the at least one substrate inserted therein is no longer at least partially submerged and/or the first tank is substantially free from the sol-gel like mixture. The at least one substrate is removed from the first tank in step S61.

In step S63, the sol-gel like mixture is provided to the second tank at a third controlled rate until the at least one substrate inserted therein is at least partially submerged. At least some of the sol-gel like mixture may be provided to the second tank as it is drawn off from the first tank. The at least one substrate is allowed to remain at least partially submerged in the sol-gel like mixture provided to the second tank for a predetermined amount of time in step S65. In step S67, the sol-gel like mixture is drawn off from the second tank at a fourth controlled rate until the at least one substrate inserted therein is no longer at least partially submerged and/or the second tank is substantially free from the sol-gel like mixture. In step S69, the at least one substrate is removed from the second tank.

In step S71, it is determined whether there are more substrates to be coated. If there are not, the process is ended. However, if there are more substrates to be coated, the process returns to step S51, and at least one substrate to be coated is inserted into the first tank. Similar to the description provided above, the sol-gel like mixture may be provided to the first tank in step S53 as it is drawn off from the second tank. As above, the substrates optionally may be cured in making the coated articles. The process may continue as normal until the process is complete.

It will be appreciated that the example process shown in, and described with reference to, Fig. 5 may be extended so that the process may be used in connection with draw-off coating systems that include more than two coating tanks.
In general, a system for forming coatings on substrates may comprise a plurality of tanks, with each said tank being configured to receive one or more substrates to be coated, and with each said tank comprising at least one door provided on a side thereof allowing the one or more substrates to be inserted into and/or removed therefrom; and at least one coating flow distributor configured to pump and draw-off the coating mixture between the tanks such that the levels of the coating mixture rise and fall at substantially the same or different uniform rates.

Certain example embodiments may provide a number of advantages, e.g., as compared to conventional dip coating processes. For example, the multi-tank system is conducive to producing a high product yield. Also, the draw-off tank approach of certain example embodiments is conducive to creating high quality coated articles. This is related, in part, to the reduced amount of substrate vibrations and shorter time in which particle attacks may occur, both of which typically happen as the substrates are being positioned, dipped into, and/or removed from, conventional dip-coating tanks.

Advantageously, the techniques of certain example embodiments may be used in a smaller clean room and production space, as compared to conventional dip coating techniques, since the substrates may be inserted and removed from the sides, rather than from the above. Indeed, the tanks of certain example embodiments only have to be slightly larger than the glass substrates to be coated. The clean room, and the coating environment in general, may be maintained more easily, as it is comparatively easier to keep a closed tank clean than an entire room.

Also advantageously, the amount of coating evaporation may be reduced, as the coating system is substantially closed. That is, the door(s) of a tank according to an example embodiment is/are only opened as substrates are inserted and removed from the tank, as opposed to a conventional dip coating tank where the top is substantially always open. Similarly, the draw-off arrangement of certain example embodiments reduces the likelihood of concentrated coating material dripping back into coating mixture, e.g., when the substrate is removed.

Some of these and/or other advantages conveyed by certain example embodiments help contribute to a more controllable process, where it is easier to more tightly control the coating process (e.g., as the rhelogical properties tend to be more consistent).

It will be appreciated that a computer-controlled system may be provided in connection with certain example embodiments. Such a computer-controlled system may allow a user to program the rates at which the coating mixture should be provided and drawn-off, e.g., on a per-tank, per-system, or other basis. Similarly, such a computer-controlled system may allow a user to program the amount of coating mixture to provide to a tank (e.g., based on the size of the substrate to be coated, etc.). Also, a user may be able to program dwell times. It will be appreciated that these and/or other process conditions may be varied and/or controlled.

A description of how an example "sol" suitable for use in connection with certain example embodiments is now provided. A "sol" is prepared, which includes a solution or suspension in water, alcohol and/or hydroalcoholic mixtures of precursor(s) of the element(s) whose oxide(s) is/are to be prepared. For instance, precursors may be alkoxides, of formula M(OR)ₙ, where M represents the element (e.g., Si) whose oxide is desired, the group -OR is the alkoxide moiety, and "n" represents the valence of M; soluble salt(s) of M such as chlorides, nitrates, and oxides may be used in place of alkoxides in certain example embodiments. During this phase, the precursor(s) may begin to hydrolyze (with or without an acid or base catalyst), e.g., alkoxide moieties or other anion bonded to the element M(s) may be replaced by -OH groups. Sol-gelation may take from a few seconds to several days, depending on the chemical composition and temperature of the solution. During sol-gelation, hydrolysis of the possibly remaining precursor(s) may be completed or substantially completed, and condensation may occur including reaction of -OH group(s) belonging to different molecules with formation of a free water molecule and an oxygen bridge between atoms M, M' (which may be alike or different). The product obtained in this sol-gelation phase may be called alcogel, hydrogel, xerogel, or the like, or more generally "gel" as is widely used to cover all such instances. Gel drying then occurs; in this phase, the solvent is removed by evaporation or through transformation into gas (e.g., via heating in certain instances), and a solid or dry body is obtained. Densification may be performed by heat treating or curing in certain example embodiments, whereby a porous gel densifies thereby obtaining a glassy or ceramic compact oxide.

It will be appreciated that other example "sols" may be prepared in the foregoing and/or other ways, and also may be used in connection with certain example embodiments. Furthermore, it will be appreciated that the coating mixtures suitable for use with certain example embodiments do not necessarily have to be sol-gel mixtures. Thus, the draw-off coating techniques of certain example embodiments may incorporate any suitable coating mixture.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

In the following further preferred embodiments are exemplarily disclosed:
1. An apparatus for forming a coating on a substrate, comprising:
   a sealed tank configured to receive one or more substrates to be coated;
   at least one door provided on a side of the tank allowing the one or more substrates to be inserted into and/or removed from the tank; and
   a coating flow distributor, the coating flow distributor being configured to (a) pump coating mixture into the tank in a first controlled manner such that a level of the coating mixture in the tank rises at a first substantially uniform rate, and (b) draw-off the coating mixture in a second controlled manner such that the level of the coating mixture in the tank decreases at a second substantially uniform rate.
2. The apparatus of 1, wherein the first and second substantially uniform rates are substantially the same.
3. The apparatus of 1, wherein the coating flow distributor is located below the tank.
4. The apparatus of 1, further comprising:
   a first door provided on a side of the tank allowing the one or more substrates to be inserted into the tank; and
   a second door provided on a side of the tank opposite the first door allowing the one or more substrates to be removed from the tank.
5. The apparatus of further comprising a track provided to the top and/or bottom of the tank for allowing the one or more substrates to be inserted into, positioned within, and/or removed from the tank.
6. The apparatus of 1, wherein the top of the tank is closed.
7. A method of making a coated article, the method comprising:
   inserting, at least one substrate to be coated into a tank;
   providing a coating mixture to the tank in a first controlled manner until the at least one substrate inserted therein is at least partially submerged, the coating mixture rising at substantially uniform levels;
   allowing the at least one substrate to remain at least partially submerged in the coating mixture for a predetermined amount of time; and
   drawing-off the coating mixture from the tank at a second controlled manner until the at least one substrate inserted therein is no longer at least partially submerged, the coating mixture falling at substantially uniform levels.
8. The method of. 7, wherein the first and second controlled manners cause the coating mixture to rise and fall at substantially the same rates.
9. The method of 7, wherein the at least one substrate is inserted into the tank via a first door provided on a side of the tank, and wherein the at least one substrate is removed from the tank via a second door provided on a side of the tank opposite the first door.
10. The method of 7, further comprising inserting into, and removing from, the tank the at least one substrate, via a track provided to the top and/or bottom of the tank.
11. The method of 7, further comprising curing the at least one substrate in making the coated article.
12. The method of .7, wherein the coating mixture is a sol gel mixture .
13. A system for forming coatings on substrates, comprising:
   first and second sealed tanks, each said tank being configured to receive one or more substrates to be coated and each said tank comprising at least one door provided on a side thereof allowing the one or more substrates to be inserted into and/or removed therefrom; and
   at least one coating flow distributor configured to:
      (a) pump the coating mixture into the first tank in a first controlled manner such that a level of the coating mixture in the first tank rises at a first substantially uniform rate,
      (b) draw-off the coating mixture in the first tank in a second controlled manner such that the level of the coating mixture in the first tank decreases at a second substantially uniform rate,
      (c) pump the coating mixture into the second tank as it is being drawn-off from the first tank in a third controlled manner such that a level of the coating mixture in the second tank rises at a third substantially uniform rate,
      (d) draw-off the coating mixture in the second tank in a fourth controlled manner such that the level of the coating mixture in the second tank decreases at a fourth substantially uniform rate, and
      (e) pump the coating mixture into the first tank as it is being drawn-off from the second tank in the first controlled manner such that a level of the coating mixture in the first tank rises at the first substantially uniform rate.
14. The system of 13, wherein the first and second substantially uniform rates are substantially the same.
15. The system of 13, wherein the third and fourth substantially uniform rates are substantially the same.
16. The system of .13, wherein the first and third substantially uniform rates are substantially the same, and wherein the second and fourth substantially uniform rates are substantially the same.
17. The system of 13, wherein each said tank has a coating distributor connected thereto.
18. The system of 13, wherein each said tank further comprises:
   a first door provided on a side of the tank allowing the one or more substrates to be inserted into the tank; and
   a second door provided on a side of the tank opposite the first door allowing the one or more substrates to be removed from the tank.
19. The system of 13, wherein each said tank further comprises a track provided to the top and/or bottom of the tank for allowing the one or more substrates to be inserted into, positioned within, and/or removed from the tank.
20. A method of making a coated article, the method comprising:
   inserting at least one substrate to be coated into a first tank;
   providing a coating mixture to the first tank in a first controlled manner until the at least one substrate inserted therein is at least partially submerged, the coating mixture rising at substantially uniform levels in the first tank;
   allow the at least one substrate to remain at least partially submerged in the coating mixture provided to the first tank for a first predetermined amount of time;
   insert at least one substrate to be coated into a second tank;
   drawing-off the coating mixture from the first tank in a second controlled manner until the at least one substrate inserted therein is no longer at least partially submerged, the coating mixture falling at substantially uniform levels in the first tank;
   removing the at least one substrate from the first tank;
   providing the coating mixture to the second tank from the first tank in a third controlled manner until the at least one substrate inserted in the second tank is at least partially submerged, the coating mixture rising at substantially uniform levels in the second tank;
   allow the at least one substrate to remain at least partially submerged in the coating mixture provided to the second tank for a second predetermined amount of time;
   drawing-off the coating mixture from the second tank in a fourth controlled manner until the at least one substrate inserted therein is no longer at least partially submerged, the coating mixture falling at substantially uniform levels in the second tank; and
   remove the at least one substrate from the second tank.
21. The method of 20, wherein the first and second controlled manners cause the coating mixture to rise and fall at substantially the same rates in the first tank, the third and fourth controlled manners cause the coating mixture to rise and fall at substantially the same rates in the second tank, the first and third controlled manners cause the coating mixture to rise in the first and second tanks respectively at substantially the same rates, and/or the second and fourth controlled manners cause the coating mixture to fall in the first and second tanks respectively at substantially the same rates.
22. The method of 20, further comprising curing the at least one substrate from the first tank and/or the at least one substrate from the second tank in making the coated article.
23. The method of 20, wherein the coating mixture is a sol gel mixture.
24. The method of 20, further comprising providing the coating mixture to the first tank from the second tank in the first controlled manner until the at least one substrate inserted in the first tank is at least partially submerged, the coating mixture rising at substantially uniform levels in the first tank.
25. A system for forming coatings on substrates, comprising:
   a plurality of tanks, each said tank being configured to receive one or more substrates to be coated and each said tank comprising at least one door provided on a side thereof allowing the one or more substrates to be inserted into and/or removed therefrom; and
   at least one coating flow distributor configured to pump and draw-off the coating mixture between the tanks such that the levels of the coating mixture rise and fall at substantially the same or different uniform rates.

## Claims

1. An apparatus for forming a coating on a substrate, comprising:
a sealed tank (20) configured to receive one or more substrates (10a, 10b) to be coated;
at least one door (22a) provided on a side of the tank allowing the one or more substrates to be inserted into and/or removed from the tank; and
a coating flow distributor , the coating flow distributor being configured to (a) pump coating mixture into the tank in a first controlled manner such that a level of the coating mixture in the tank (20) rises at a first substantially uniform rate, and (b) draw-off the coating mixture in a second controlled manner such that the level of the coating mixture in the tank decreases at a second substantially uniform rate.

2. The apparatus of claim 1, wherein the first and second substantially uniform rates are substantially the same.

3. The apparatus of claim 1, wherein the coating flow distributor is located below the tank (20).

4. The apparatus of claim 1, further comprising:
a first door (22a) provided on a side of the tank (20) allowing the one or more substrates (10a, 10b) to be inserted into the tank (20); and
a second door provided on a side of the tank opposite the first door allowing the one or more substrates to be removed from the tank.

5. The apparatus of claim 1, further comprising a track provided to the top and/or bottom of the tank (20) for allowing the one or more substrates (10a, 10b) to be inserted into, positioned within, and/or removed from the tank.

6. A method of making a coated article, the method comprising:
inserting at least one substrate to be coated into a tank;
providing a coating mixture to the tank in a first controlled manner until the at least one substrate inserted therein is at least partially submerged, the coating mixture rising at substantially uniform levels;
allowing the at least one substrate to remain at least partially submerged in
the coating mixture for a predetermined amount of time; and
drawing-off the coating mixture from the tank at a second controlled manner until the at least one substrate inserted therein is no longer at least partially submerged, the coating mixture falling at substantially uniform levels.

7. The method of claim 6, further comprising curing the at least one substrate in making the coated article.

8. The method of claim 6, wherein the coating mixture is a sol gel mixture.

9. A system for forming coatings on substrates, comprising:
first and second sealed tanks (20a, 20b), each said tank being configured to receive one or more substrates (10a, 10b) to be coated and each said tank (20a, 20b) comprising at least one door (22a, 22b) provided on a side thereof allowing the one or more substrates to be inserted into and/or removed therefrom; and
at least one coating flow distributor configured to:
(a) pump the coating mixture into the first tank (20a) in a first controlled manner such that a level of the coating mixture in the first tank rises at a first substantially uniform rate,
(b) draw-off the coating mixture in the first tank (20a) in a second controlled manner such that the level of the coating mixture in the first tank decreases at a second substantially uniform rate,
(c) pump the coating mixture into the second tank (20b) as it is being drawn-off from the first tank in a third controlled manner such that a level of the coating mixture in the second tank rises at a third substantially uniform rate,
(d) draw-off the coating mixture in the second tank (20b) in a fourth controlled manner such that the level of the coating mixture in the second tank decreases at a fourth substantially uniform rate, and
(e) pump the coating mixture into the first tank (20a) as it is being drawn-off from the second tank (20b) in the first controlled manner such that a level of the coating mixture in the first tank rises at the first substantially uniform rate.

10. The system of claim 9, wherein the first and third substantially uniform rates are substantially the same, and wherein the second and fourth substantially uniform rates are substantially the same.

11. A method of making a coated article, the method comprising:
inserting at least one substrate to be coated into a first tank;
providing a coating mixture to the first tank in a first controlled manner until the at least one substrate inserted therein is at least partially submerged, the coating mixture rising at substantially uniform levels in the first tank;
allow the at least one substrate to remain at least partially submerged in the coating mixture provided to the first tank for a first predetermined amount of time;
insert at least one substrate to be coated into a second tank;
drawing-off the coating mixture from the first tank in a second controlled manner until the at least one substrate inserted therein is no longer at least partially submerged, the coating mixture falling at substantially uniform levels in the first tank;
removing the at least one substrate from the first tank;
providing the coating mixture to the second tank from the first tank in a third controlled manner until the at least one substrate inserted in the second tank is at least partially submerged, the coating mixture rising at substantially uniform levels in the second tank;
allow the at least one substrate to remain at least partially submerged in the coating mixture provided to the second tank for a second predetermined amount of time;
drawing-off the coating mixture from the second tank in a fourth controlled manner until the at least one substrate inserted therein is no longer at least partially submerged, the coating mixture falling at substantially uniform levels in the second tank; and
remove the at least one substrate from the second tank.

12. The method of claim 11, wherein the first and second controlled manners cause the coating mixture to rise and fall at substantially the same rates in the first tank, the third and fourth controlled manners cause the coating mixture to rise and fall at substantially the same rates in the second tank, the first and third controlled manners cause the coating mixture to rise in the first and second tanks respectively at substantially the same rates, and/or the second and fourth controlled manners cause the coating mixture to fall in the first and second tanks respectively at substantially the same rates.

13. The method of claim 11, wherein the coating mixture is a sol gel mixture.

14. The method of claim 11, further comprising providing the coating mixture to the first tank from the second tank in the first controlled manner until the at least one substrate inserted in the first tank is at least partially submerged, the coating mixture rising at substantially uniform levels in the first tank.

15. A system for forming coatings on substrates, comprising:
a plurality of tanks (20a, 20b), each said tank being configured to receive one or more substrates (10a, 10b) to be coated and each said tank comprising at least one door (22a, 22b) provided on a side thereof allowing the one or more substrates to be inserted into and/or removed therefrom; and
at least one coating flow distributor configured to pump and draw-off the coating mixture between the tanks such that the levels of the coating mixture rise and fall at substantially the same or different uniform rates.
